# EUROPÄISCHE PATENTANMELDUNG

(11) **EP 1 058 470 A2**
(43) Veröffentlichungstag der Anmeldung: **06.12.2000**
(21) Anmeldenummer: 00111386.9
(22) Anmeldetag: 26.05.2000
(51) Int. Cl.: H04Q 7/36

(54) **Verfahren zum Betreiben eines Mobilfunksystems sowie dafür geeignete Basisstation**

(30) Priorität: 01.06.1999 DE 19925263
(71) Anmelder: SIEMENS AKTIENGESELLSCHAFT, 80333 München (DE)
(72) Erfinder: Wedi, Christoph, 46395 Bocholt (DE)

(57) **Zusammenfassung**

Verfahren zum Betreiben eines nach einem FDMA/TDMA-Verfahren arbeitenden Mobilfunksystems mit einer Basisstation und mehreren an dieser angemeldeten Mobilteilen, bei welchem in jedem Zeitschlitz zu Beginn ein Kurznachrichtenpaket übertragen wird und seitens der Basisstation die Trägerfrequenz im Rahmen einer vorgegebenen Menge von möglichen Trägerfrequenzen ständig geändert wird, wobei seitens der Basisstation in jedem Zeitschlitz unmittelbar nach dem Kurznachrichtenpaket ein Frequenzwechsel freigegeben oder veranlaßt wird. In einer Basisstation sind der digitale Signalprozessor (DSP) und der Mikrocontroller (MCR) dazu eingerichtet, unmittelbar nach Erhalt des Kurznachrichtenpaketes eines Zeitschlitzes die Frequenzinformation für den nachfolgenden Zeitschlitz an den Burst Mode Controller (BMC) zu liefern.

## Beschreibung

Die Erfindung bezieht sich auf ein Verfahren zum Betreiben eines nach einem FDMA/TDMA-Verfahren arbeitenden Mobilfunksystems mit einer Basisstation und mehreren an dieser angemeldeten Mobilteilen, bei welchem in jedem Zeitschlitz zu Beginn ein Kurznachrichtenpaket übertragen wird und seitens der Basisstation die Trägerfrequenz im Rahmen einer vorgegebenen Menge von möglichen Trägerfrequenzen ständig geändert wird.

Ebenso bezieht sich die Erfindung auf eine Basistation für ein nach einem FDMA/TDMA-Verfahren arbeitendes Mobilfunksystem, bei welchem in jedem Zeitschlitz zu Beginn ein Kurznachrichtenpaket übertragen wird, und seitens der Basisstation die Trägerfrequenz im Rahmen einer vorgegebenen Menge von möglichen Trägerfrequenzen ständig geändert wird, mit einem HF-Teil, einem Burst Mode Controller, einem Mikrocontroller zur Steuerung des HF-Teils sowie mit einem digitalen Signalprozessor.

Die folgende Beschreibung bezieht sich vorwiegend auf ein DECT-Schnurlostelefonsystem, doch ist die Erfindung in gleicher Weise auf andere Mobilfunksysteme anwendbar, welche die hier vorausgesetzten Merkmale aufweisen.

Das DECT-System ist ein Frequency Division Multiple Access/Time Division Multiple Access-System (FDMA/TDMA) mit Time Division Duplex (TDD) in picozellularer Struktur, wobei das zur Verfügung stehende Frequenzband nach derzeit geltendem Standard in 10 Trägerfrequenzen aufgeteilt ist. Jeder dieser Träger hält 24 Zeitschlitze (= Slots) bereit, nämlich 12 für den Funkweg Basisstation-Mobilteil und 12 für den Funkweg Mobilteil-Basisstation. Nähere Einzelheiten des DECT-Systems sind dem Werk "Mobilfunknetze und ihre Protokolle", Band 2, B. Walke, B. G. Teubner Verlag 1998, ISBN 3-519-06430-8, insbesondere Seiten 107 bis 215 oder, zusammengefaßt dem Artikel "Struktur des DECT-Standards", U. Pilger, Nachrichtentech., Elektron., Berlin 42 (1992)1, Seiten 23 bis 29, zu entnehmen. Genaue Details finden sich in den auf DECT bezogenen ETSI-Standards, herausgegeben von dem European Telecommunications Standards Institute. Der Inhalt dieser Empfehlungen wird als für den Fachmann bekannt vorausgesetzt.

In die Struktur der Zeitschlitze sind sogenannte Physical Packets eingesetzt, die jeweils aus einem Synchronisationsfeld S und einem Datenfeld D bestehen. Um ein Überlappen benachbarter Zeitschlitze zu verhindern, ist jedes Physical Package um eine Schutzzeit kürzer als der Zeitschlitz. Das D-Feld oder Datenfeld besitzt zwei Teile, nämlich das A-Feld zur Übertragung von Steuerinformationen mit einer Länge von 64 bit und das B-Feld für die Netzdaten mit einer Länge von 324 bit im Full-Slot-Betrieb.

Nach dem Einschalten eines Mobilteils muß dieses zunächst eine Synchronisation mit einer Basisstation suchen. Zu diesem Zweck sendet jede Basisstation einen sogenannten Dummy Bearer, der aus den Daten eines Zeitschlitzes besteht, wobei jedoch im B-Feld noch keine Daten übertragen werden. Zur Suche nach einem Dummy Bearer sucht das Mobilteil gemäß dem Stand der Technik zyklisch in dem gesamten Frequenzband nach einer Basisstation, welche auch eine geeignete Identität (Radio Fixed Part Identification) aufweisen muß. Bei mehreren geeigneten Basisstationen wird jene mit der größten Feldstärke selektiert, was auf Basis des sogenannten RSSI-Wertes (Radio Signal Strength Indicator) erfolgt. Die Steuerung der Suche erfolgt über den Burst Mode Controller, der für eine bestimmte Zeit, z. B. 40 ms beim sogenannten "slow hopping" auf einer ersten Frequenz auf geraden Zeitschlitzen und sodann auf ungeraden Zeitschlitzen nach Basisstationen sucht. Dagegen wird beim "fast hopping" sequentiell durchsucht. Dann wird die nächste Frequenz eingestellt und wieder, zunächst auf geraden und dann ungeraden Zeitschlitzen gesucht usf. Falls nach Durchlauf aller 10 Frequenzen keine Basis gefunden wurde, können verschiedene Algorithmen aktiviert werden, wonach der Suchvorgang in bestimmten Zeiträumen, die gegebenenfalls auch immer länger werden, wiederholt wird.

Bei einer Basisstation sind üblicherweise mehrere Mobilteile angemeldet und es besteht der Wunsch mit möglichst vielen dieser Mobilteile bidirektionale Datenverbindungen zu unterhalten. Bei dem Aufbau einer Verbindung auf dem A-Feld Bearer wird in einem "slow-hopping"-System automatisch der nachfolgende Zeitschlitz blockiert, da dieser für ein neuerliches Wechseln der Frequenz im nachfolgenden Schlitz benötigt wird. Daher können auf dem verbleibenden Zeitschlitzen höchstens fünf weitere Mobilteile eine Verbindung aufbauen.

Eine Aufgabe der Erfindung liegt darin, bei gegebener Rahmenstruktur möglichst viele Mobilteile zusammen mit einer Basisstation aktiv betreiben zu können.

Diese Aufgabe wird, ausgehend von einem Verfahren der eingangs genannten Art erfindungsgemäß dadurch gelöst, daß seitens der Basisstation in jedem Zeitschlitz unmittelbar nach dem Kurznachrichtenpaket ein Frequenzwechsel freigegeben oder veranlaßt wird.

Die Erfindung erlaubt eine ökonomische Nutzung der zur Verfügung stehenden Zeit/Frequenz-Ressourcen, was die Verwendung einer späteren Anzahl voll einsatzbereiter Mobilteile bei z.B. einer DECT-Anlage ermöglicht.

Besonders zweckmäßig ist die Erfindung, falls das Mobilfunksystem ein DECT-System und das Kurznachrichtenpaket das POO-Paket ist. Die Länge des POO-Paketes beträgt 96 bit, so daß für den Einschwingvorgang des Synthesizers bzw. allgemein den Frequenzwechsel noch 384 bit, entsprechend 333 µs verbleiben.

Besondere Vorteile ergibt die Erfindung, falls die Basisstation den Frequenzwechsel im Slow-Hopping-Verfahren durchführt, da sie sich bei Übertragung von Kurznachrichtenprotokollen hier quasi wie eine "fast-hopping"-Basis verhält.

Die gestellte Aufgabe wird auch mit einer Basisstation der eingangs genannten Art gelöst, bei welcher erfindungsgemäß der digitale Signalprozessor und der Mikrocontroller dazu eingerichtet sind, unmittelbar nach Erhalt des Kurznachrichtenpaketes eines Zeitschlitzes die Frequenzinformation für den nachfolgenden Zeitschlitz an den Burst Mode Controller zu liefern.

Dabei kann zweckmäßigerweise vorgesehen sein, daß sie für ein DECT-System ausgebildet und das Kurznachrichtenpaket das POO-Paket im A-Feld ist.

Vorteilhaft ist es auch, wenn der digitale Signalprozessor und der Mikroprozessor den Burst Mode Controller im Slow-Hopping-Verfahren steuern.

Die mit der Basisstation nach der Erfindung und ihren Varianten erzielbaren Vorteile entsprechen den bereits im Zusammenhang mit dem Verfahren genannten.

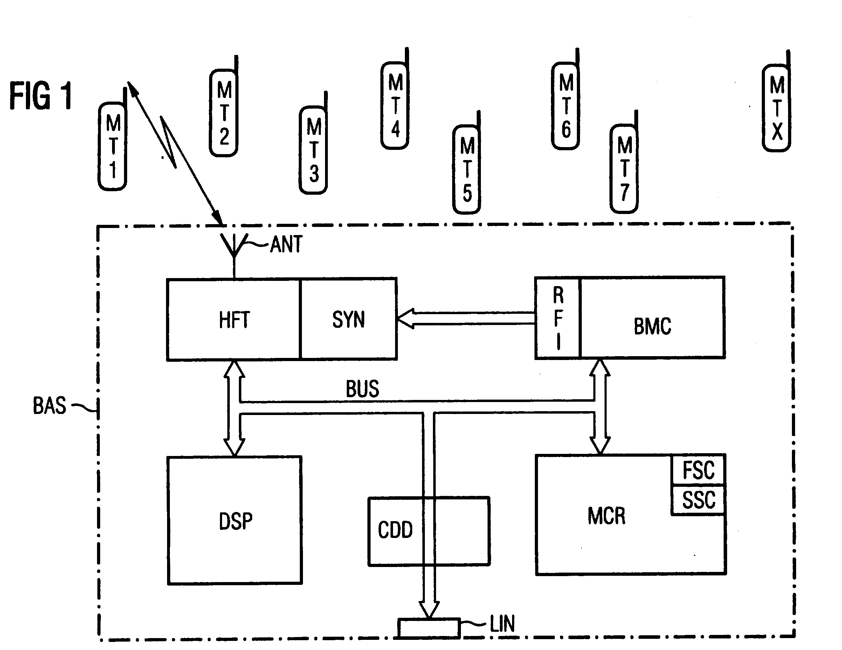

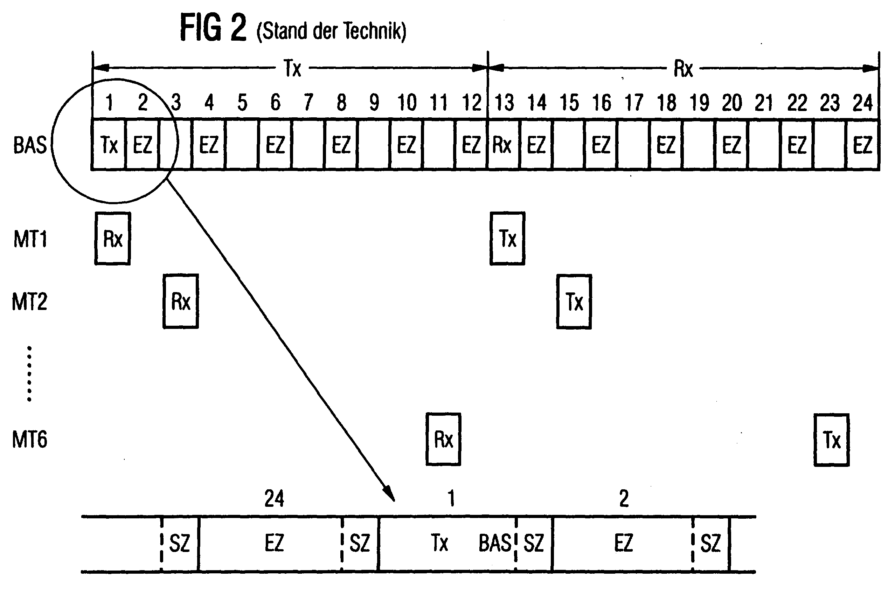

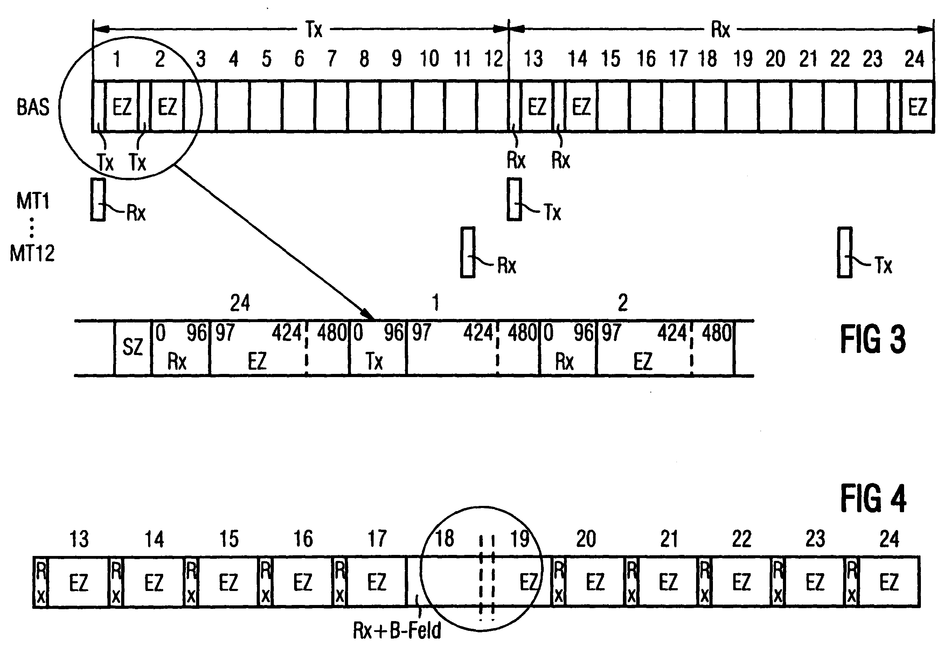

Die Erfindung samt weiterer Vorteile ist im folgenden anhand einer beispielsweisen Ausführungsform unter Bezugnahme auf die Zeichnung näher erläutert. In dieser zeigen
■ Fig 1 schematisch eine Basisstation eines DECT-Schnurlossystems in einem Blockschaltbild mit einigen Mobilteilen,
■ Fig. 2 das Verfahren zur Nachrichtenübermittlung bzw. zum Frequenzwechsel nach dem Stand der Technik, schematisch, unter Bezugnahme auf einen Übertragungsrahmen,
■ Fig. 3 in ähnlicher Darstellung wie in Fig. 1 das Verfahren nach der Erfindung, und
■ Fig. 4 die Situation bei einer laufenden Verbindung zwischen zwei Mobilteilen.

Eine Basisstation BAS besteht gemäß Fig. 1 im wesentlichen aus einem HF-Teil HFT mit einem Synthesizer SYN, wobei dieser HF-Teil zum Senden und Empfangen Ober eine Antenne ANT dient. Ein Mikrocontroller MCR mit einem Frequenzscan FSC und einem Zeitschlitzscan SSC steuert auch einen Burst Mode Controller BMC mit einer HF-Schnittstelle RFI zum HF-Teil bzw. dessen Synthesizer. Die Basisstation BAS ist über eine Leitungsschnittstelle LIN an ein hier nicht gezeigtes Netz angeschlossen, wobei ein Coder/Decoder CDD für die Umwandlung analoger in digitale Signale und umgekehrt sorgen kann. Zur Verarbeitung von Sprach- oder anderen Daten dient ein digitaler Signalprozessor DSP. Ein solcher Signalprozessor kann jedoch auf softwaremäßig in dem Mikrocontroller MCR enthalten sein. Innerhalb der Basisstation BAS sorgt ein Bussystem BUS für die Datenübertragung.

Zur Erläuterung der Erfindung wird zunächst der Stand der Technik unter Zuhilfenahme der Fig. 2 beschrieben. In dieser ist ein Rahmen mit 24 Zeitschlitzen dargestellt, von welchen die ersten zwölf zur Übertragung von der Basisstation zu den Mobilteilen (= "down link") dienen und mit Tx bezeichnet sind, wogegen die zweiten zwölf zur Übertragung von den Mobilteilen zu der Basisstation (= "up link") dienen und mit Rx bezeichnet sind. Mit Tx bezeichnete Schlitze sind generell Sendeschlitze, mit Rx bezeichnete Empfangsschlitze, EZ bedeutet die mögliche Einschwingzeit und SZ eine Schutzzeit von 56 Bit, um ein Fast-Hopping bzw. Laufzeiten zwischen der Basisstation und Mobilteilen ausgleichen zu können. Bei Slow-Hopping steht jedenfalls die Länge eines Datenfeldes von 424 Bit zur Verfügung.

In der obersten Reihe ist der Zeitschlitz für eine Basisstation BAS gezeigt, darunter einige Sende- und Empfangsschlitze Tx, Rx von sechs Mobilteilen MT1 bis MT6 und darunter vergrößert, als Ausschnitt, der Übergangsbereich zweier Rahmen.

Falls das Mobilteil MT1 einen Ruf oder Sammelruf erzeugen möchte, wird dazu auf dem A-Feld Bearer eine Verbindung aufgebaut. Dadurch ist jedoch bereits der nachfolgende Schlitz blockiert, da dieser für einen Frequenzwechsel im nächsten Schlitz benötigt wird, um die Einschwingzeit der HF-Teile zu berücksichtigen.

Dies hat zur Folge, daß auf den restlichen Schlitzen maximal fünf weitere Mobilteile eine Verbindung aufbauen können, um beispielsweise eine Erreichbarkeitsmeldung an die Basisstation BAS senden zu können oder um Serviceeinstellungen an der Basisstation durchzuführen etc. Demgemäß können seitens eines rufenden Mobilteils bis zu fünf andere Mobilteile - bei Informationsaustausch mit der Basisstation - gerufen werden. Beispielsweise kann dem Mobilteil MT1 gemeldet werden, daß die Mobilteile MT2 bis MT6 gerufen werden.

Falls mehr als sechs Mobilteile an der Basisstation angemeldet sind, so können diese zwar über den Bearer gerufen werden, doch erfolgt dann nur ein Blind-Rufen, d.h. die weiteren Mobilteile "klingeln" zwar, doch erfolgt keine Rückmeldung bzw. ein Datenaustausch, so daß die Basisstation und damit auch das rufende Mobilteil nicht weiß, welche Mobilteile erreichbar sind.

Die Erfindung ist nun unter Bezugnahme auf Fig. 3 erläutert, und sie geht davon aus, daß für den Datenaustausch zwischen der Basisstation und den Mobilteilen nur eine Übertragung des A-Feldes notwendig ist. Dieses wird beispielsweise beim Rufen eines Mobilteils benötigt, um die volle Funktionalität zu erhalten, z.B. Displayanzeige und sonstige Informationen. Die Darstellung nach Fig. 3 folgt jener nach Fig. 2, jedoch sind die erwähnten A-Felder berücksichtigt, in welchem die sogenannte P00-Nachrichten (Short Physical Packet) mit 96 bit übertragen werden. Das Mobilteil MT1 baut nun auf dem A-Feld Bearer eine Verbindung auf und erzeugt einen Ruf bzw. Sammelruf. Da es sich um keine Sprachverbindung handelt, kann der Basisteil nun bereits unmittelbar nach dem A-Feld des empfangenen Schlitzes, d.h. nach dem Bit 96 dem Synthesizer des HF-Teils, die Frequenzinformation für den nachfolgenden Schlitz - im Beispiel nach Fig. 3 den Schlitz 2 bzw. 14 liefern. Das HF-Teil hat damit noch über 330 µs Zeit, um für den nachfolgenden Schlitz die richtige (der zehn) Trägerfrequenzen einzustellen. Diese Zeit ist auch für die heute verwendeten "slow hopping"-HF-Teile ausreichend, bzw. sind HF-Teile mit entsprechend kurzer Einschwingzeit problemlos realisierbar.

Es ist offensichtlich, daß es die Erfindung ermöglicht, daß bei einem Verbindungaufbau eines Mobilteils MT1 nun elf zusätzliche Mobilteile eine A-Feld-Verbindung zur Basis aufbauen (statt bisher fünf). Es ist daher dank der Erfindung nun wirklich sinnvoll, mehr als sechs Mobilteile bei einer Basisstation angemeldet zu haben, da alle Mobilteile die Informationen im A-Feld, z.B. Displayanzeige, erhalten.

Wie Fig. 4 zeigt, fällt allerdings für jede Sprachverbindung, d.h. Übertragung eines A- und B-Feldes der nachfolgende Schlitz weg, d.h. selbst bei einer laufenden Verbindung zwischen zwei Internteilnehmern, z.B. den Mobilteilen MT2 und MT3, können noch mit bis zu acht Mobilteilen bidirektionale Verbindungen mit einem A-Feld-Datentransfer unterhalten werden.

Der mögliche Ablauf eines Verbindungaufbaus ist im folgenden kurz umrissen:
□ Die Basisstation BAS ist in Ruhe und sendet den A-Feld Bearer.
□ Das Mobilteil MT1 baut mit der A-Feld-Signalisierung eine Verbindung auf.
□ Das Mobilteil MT1 ruft eines, mehrere oder alle der Mobilteile MT2 ... MT11.
   Falls das Mobilteil MT1 z.B. nur das Mobilteil MT2 ruft, können die Mobilteile MT3 bis MT11 Verbindung zur Basis, z.B. für Serviceeinstellungen aufbauen.
□ Den jeweiligen Mobilteilen MT2 bis MT11 wird im A-Feld Bearer signalisiert, daß sie gerufen werden.
□ Die erreichbaren Mobilteile aus MT2 bis MT11 bauen an der Basisstation BAS jeweils einen A-Feld Bearer auf und erhalten Über diesen Bearer Information, z.B. Displayinformation.
□ Das Mobilteil MT1 erhält die Rückmeldung, welche der übrigen Mobilteile aus MT2 ... MT11 erreichbar sind.
□ Wenn eines der Mobilteile den Ruf entgegennimmt, wird zu diesem ein Sprachkanal aufgebaut. Die A-Feld Bearer der anderen Mobilteile werden wieder abgebaut.

## Patentansprüche

1. Verfahren zum Betreiben eines nach einem FDMA/TDMA-Verfahren arbeitenden Mobilfunksystems mit einer Basisstation und mehreren an dieser angemeldeten Mobilteilen, bei welchem in jedem Zeitschlitz zu Beginn ein Kurznachrichtenpaket übertragen wird und seitens der Basisstation die Trägerfrequenz im Rahmen einer vorgegebenen Menge von möglichen Trägerfrequenzen ständig geändert wird,
**dadurch gekennzeichnet,**
daß seitens der Basisstation in jedem Zeitschlitz unmittelbar nach dem Kurznachrichtenpaket ein Frequenzwechsel freigegeben oder veranlaßt wird.

2. Verfahren nach Anspruch 1,
**dadurch gekennzeichnet,** daß das Mobilfunksystem ein DECT-System und das Kurznachrichtenpaket ein POO-Paket ist.

3. Verfahren nach Anspruch 2,
**dadurch gekennzeichnet,** daß die Basisstation den Frequenzwechsel im Slow-Hopping-Verfahren durchführt.

4. Basisstation für ein nach einem FDMA/TDMA-Verfahren arbeitendes Mobilfunksystem, bei welchem in jedem Zeitschlitz zu Beginn ein Kurznachrichtenpaket übertragen wird und seitens der Basisstation die Trägerfrequenz im Rahmen einer vorgegebenen Menge von möglichen Trägerfrequenzen ständig geändert wird, mit einem HF-Teil (HFT), einem Burst Mode Controller (BMC), einem Mikrocontroller (MCR) zur Steuerung des HF-Teils sowie mit einem digitalen Signalprozessor (DSP),
**dadurch gekennzeichnet,**
daß der digitale Signalprozessor (DSP) und der Mikrocontroller (MCR) dazu eingerichtet sind, unmittelbar nach Erhalt des Kurznachrichtenpaketes eines Zeitschlitzes die Frequenzinformation für den nachfolgenden Zeitschlitz an den Burst Mode Controller (BMC) zu liefern.

5. Basisstation nach Anspruch 4,
**dadurch gekennzeichnet,** daß sie für ein DECT-System ausgebildet und das Kurznachrichtenpaket ein POO-Paket im A-Feld ist.

6. Basisstation nach Anspruch 5,
**dadurch gekennzeichnet,** daß der digitale Signalprozessor (DSB) und der Mikroprozessor (MCR) den Burst Mode Controller (BMC) im Slow-Hopping-Verfahren steuern.
